Europäisches Patentamt

European Patent Office

Office européen des brevets

(11) Veröffentlichungsnummer: **0 301 420**
**A2**

(12) **EUROPÄISCHE PATENTANMELDUNG**

(21) Anmeldenummer: 88111806.1

(22) Anmeldetag: 22.07.88

(51) Int. Cl.4: **C08F 220/12 , C08F 212/04 , C08F 218/04 , C08F 2/24 , C09D 3/74 , //(C08F220/12, 220:12,220:28,220:58,220:04, 222:02,220:56),(C08F212/04, 220:12,220:28,220:58,220:04, 222:02,220:56),(C08F218/04, 222:12,220:28,220:58,220:04, 222:02)**

(30) Priorität: 28.07.87 DE 3724858

(43) Veröffentlichungstag der Anmeldung:
01.02.89 Patentblatt 89/05

(84) Benannte Vertragsstaaten:
AT BE CH DE ES FR GB IT LI NL SE

(71) Anmelder: **DEUTSCHE TEXACO AKTIENGESELLSCHAFT**
**Überseering 40**
**D-2000 Hamburg 60(DE)**

(72) Erfinder: **Zeibig, Winfried, Dr.**
**Oberwallstrasse 4**
**D-4130 Moers(DE)**
Erfinder: **Hüskes, Heinrich**
**Oediger Platz 1a**
**D-4150 Krefeld 29(DE)**

(74) Vertreter: **Schupfner, Gerhard D.**
**Müller, Schupfner & Gauger Karlstrasse 5**
**Postfach 14 27**
**D-2110 Buchholz/Nordheide(DE)**

(54) **Wässrige Kunststoffdispersion.**

(57) Es werden wäßrige Kunststoffdispersionen auf der Basis von Copolymerisaten aus Acryl- und/oder Vinylpolymeren bereitgestellt, die sowohl Hydroxyalkyl(meth)acrylatmonomere als auch veretherte N-Alkylol(meth)acrylamidmonomere enthalten. Diese Dispersionen sind geeignet als Bindemittel zur Herstellung von guthaftenden, glänzenden und lösungsmittelbeständigen wärmehärtbaren Überzugsmitteln.

EP 0 301 420 A2

EP 0 301 420 A2

## Wäßrige Kunststoffdispersion

Die Erfindung betrifft eine wäßrige Kunststoffdispersion auf Basis eines Copolymerisates aus Acryl- und/oder Vinylmonomeren, enthaltend mindestens zwei verschiedene, miteinander vernetzungsfähige Monomeren, sowie Emulgatoren.

Für die Herstellung von wärmehärtbaren Überzügen besitzen wäßrige Copolymerisat-Dispersionen besonderes Interesse, weil sie nicht brennbar und physiologisch weniger bedenklich als Lösemittel enthaltende Überzugsmittel sind. Außerdem entfällt die Wiedergewinnung von teurem Lösemittel. Neben den Eigenschaften, die man von allen Kunststoffdispersionen fordert, wie gutes Fließverhalten, gute Verarbeitbarkeit, Koagulatfreiheit, Lager- und Temperaturbeständigkeit, ist bei Copolymerisatdispersionen, die als Bindemittel zur Herstellung von wärmehärtbaren Überzügen verwendet werden sollen, noch besonders wichtig, daß man gut verlaufende und gut haftende glänzende Überzugsmittel erhält, die nach der Wärmebehandlung weitgehend gegen Lösemittel, insbesondere gegen Ketone, Alkohol und Kohlenwasserstoffgemische beständig sind. Nach der Wärmebehandlung sollen diese Überzugsmittel hart, kratz- und bei Wärmeeinstrahlung blockfest sein. Zu diesem Zweck enthalten die den Dispersionen zugrundeliegenden Copolymerisate mindestens zwei chemisch verschiedene Gruppen im Molekül einpolymerisiert, die beim Erhitzen nach Auftrocknen des Films zur Vernetzung des vorher thermoplastischen Copolymerisates führen.

Es ist aus der DE-OS 31 47 007 bekannt, wärmehärtbare Überzugsmittel, die als Bindemittel wäßrige Dispersionen auf Basis von Acrylmonomeren enthalten, durch Copolymerisation von N-Methylolacrylamid und Hydroxyalkyl(meth)acrylaten herzustellen. Diese Dispersionen spalten jedoch größere Mengen Formaldehyd beim Härtungsprozeß ab, die mit Harnstoff abgefangen werden müssen, so daß die Wasserfestigkeit entsprechender Produkte herabgesetzt ist.

In der DE-OS 33 28 456 wird der Einsatz von cyclischen Harnstoffverbindungen zum Abfangen frei werdenden Formalins empfohlen, was ebenfalls die Wasserfestigkeit solcher Dispersionen herabsetzt.

In der DE-OS 23 64 364 wird die Herstellung von Bindemitteln beschrieben, die Chlorvinylacetat copolymerisiert enthalten und dadurch alkalisch vernetzbar sind. Nachteil dieser Dispersionen ist die Bildung von Alkalichlorid, was ebenfalls zur verringerten Wasserfestigkeit daraus hergestellter Überzüge führt.

In den Schriften DE-AS 12 48 194, DE-PS 24 31 577 und DE-OS 31 28 143 werden schließlich fremdvernetzende Bindemittel beschrieben, die aus wäßrigen Dispersionen von hydroxyl- oder carboxylgruppenhaltigen Copolymeren bestehen, denen zur Vernetzung niedrigmolekulare Amino-, Phenol- oder Melaminharze zugesetzt werden. Diese Überzugsmittel enthalten auch nach dem Härtungsprozeß noch immer etwas niedrigmolekulares Harz, das durch Wasser- oder Lösemitteleinfluß zum Glanzabbau der damit hergestellten Zubereitungen führt.

Bekannt ist ferner die Herstellung von lösemittelhaltigen Acrylharzen, die Hydroxylgruppen und Alkoximethyl(meth)acrylamidgruppen zur Vernetzung enthalten. Diese Systeme enthalten jedoch Lösemittel und werden infolge des geringen Molekulargewichtes des Polymerharzes auch bei Vernetzung nicht hochmolekular genug, um Glanzerhaltung bei Lösemittel-oder Wettereinfluß zu besitzen.

Aufgabe der Erfindung ist die Herstellung einer wäßrigen Dispersion eines Copolymerisates, das in der Wärme selbstvernetzbar ist und zu glänzenden, gut haftenden und lösemittelbeständigen Überzügen auf metallischen und Kunststoffuntergründen führt.

In Lösung der gestellten Aufgabe wird eine wäßrige Kunststoffdispersion bereitgestellt, die - bezogen auf Festsubstanz - diE folgende Zusammensetzung aufweist:

a) 20 bis 60 Gew.% eines Vinylbenzols, das mit $C_1$ bis $C_4$-Alkylgruppen im Kern oder in der Vinylgruppe substituiert sein kann, und/oder von tert-Butylacrylat oder eines Methacrylats mit einer $C_1$ bis $C_5$-Monoalkoholkomponente und/oder eines Vinylesters mit einer $C_1$ bis $C_{11}$-Monocarbonsäurekomponente oder eines Gemisches solcher Monomeren, jeweils mit einer Homopolymerisatglastemperatur Tg der einzelnen Monomeren über 35 °C,

b) 25 bis 55 Gew.% eines Acrylesters mit einer $C_1$ bis $C_8$-Monoalkoholkomponente und/oder eines Methacrylsäureesters mit einer $C_5$ bis $C_{10}$-Monoalkoholkomponente und/oder eines Vinylesters mit einer $C_1$ bis $C_{11}$-Monocarbonsäurekomponente oder eines Gemisches solcher Monomeren jeweils mit einer Homopolymerisatglastemperatur Tg der einzelnen Monomeren unter 35 °C,

c) 8 bis 15 Gew.% eines (Meth)acrylat Monomeren mit einer $C_2$ bis $C_8$-Alkanpolyolkomponente,

2

d) 8 bis 15 Gew.% eines veretherten N-Alkylol(meth)-acrylamides der allgemeinen Formel
$CH_2 = C(R_1)-C(O)-NH-(A)-O-R_2$ ,
worin R₁ Wasserstoff oder Methyl,
A $C_1$ bis $C_4$ n- oder iso-Alkylen und
$R_2$ $C_1$ bis $C_4$-Alkyl bedeuten,

(e) 0,5 bis 5 Gew.% einer alpha, beta-ungesättigten Monocarbonsäure mit 3 bis 5 Kohlenstoffatomen und/oder einer alpha, beta-ungesättigten Dicarbonsäure mit 3 bis 5 Kohlenstoffatomen und

(f) 0 bis 4 Gew.% eines Amides einer alpha, beta-ungesättigten Monocarbonsäure mit 3 bis 5 Kohlenstoffatomen und/oder einer einer alpha, beta-ungesättigten Dicarbonsäure mit 4 bis 5 Kohlenstoffatomen.

Es wurde nämlich festgestellt, daß Hydroxyalkyl(meth)acrylate bzw. veretherte N-Alkylol(meth)-acrylamide jeweils allein enthaltende Copolymerdispersionen auch bei Zusatz niedrigmolekularer Hexamethoxymethylmelaminharze durch thermische Vernetzung nicht ausreichend lösemittelbeständige und gut haftende Überzüge auf Metallen ergeben. Erst die gleichzeitige erfindungsgemäße Copolymerisation von Hydroxyalkyl(meth)acrylaten und veretherten N-Alkylol(meth)-acrylamiden zu Acrylcopolymerdispersionen führt auch ohne Zusatz von niedrigmolekularen Harnstoff- oder Melaminharzen zu gut haftenden, glänzenden und lösemittelbeständigen Überzügen auf metallischen Untergründen, selbst auf nicht entfettetem Aluminiumblech oder feuerverzinktem Eisenblech.

Gegenstand der Erfindung zur Erzielung einer glänzenden Beschichtung ist somit eine wäßrige Kunststoffdispersion auf der Basis eines Copolymerisates aus Acryl- und/oder Vinylmonomeren, die sowohl Hydroxyalkyl(meth)acrylatmonomere als auch veretherte N-Alkylol(meth)-acrylamidmonomere copolymerisiert enthält. Die erfindungsgemäße wäßrige Kunststoffdispersion hat eine mittlere Teilchengröße im Bereich von 30 nm bis 400 nm.

Die erfindungsgemäße Kunststoffdispersion hat bezogen auf die Polymersubstanz die folgende bevorzugte Zusammensetzung:

30 bis 50 Gew.% der Komponente (a),
33 bis 50 Gew.% der Komponente (b),
9 bis 11 Gew.% der Komponente (c),
9 bis 11 Gew.% der Komponente (d),
1 bis 3 Gew.% der Komponente (e) und
0,5 bis 1,5 Gew.% der Komponente (f).

Gegenstand der Erfindung ist weiterhin die Herstellung der wäßrigen Kunststoffdispersion durch radikalische Emulsionscopolymerisation des Monomerengemisches in Gegenwart eines radikalbildenden Katalysators und eines oder mehreren Emulgatoren.

Die Emulsionspolymerisation wird bevorzugt in Gegenwart von 0,3 bis 1,5 Gew.% Katalysator und 0,1 bis 5 Gew.% Emulgator(en) durchgeführt.

Das Verfahren ist insbesondere dadurch gekennzeichnet, daß man die Emulsionspolymerisation in Gegenwart von Ammonium-, Natrium- oder Kaliumsalzen der Peroxodischwefelsäure oder der Peroxodiphosphorsäure oder Gemischen davon als Katalysator und in Gegenwart von Natrium-, Kalium- oder Ammoniumsalzen von Sulfobernsteinsäureestern und -halbestern, Alkanolsulfaten und oxethylierten Alkylphenolsulfaten als anionische Emulgatoren und/oder oxethyliertem Fettalkohol oder Fettalkoholethanolamid mit 3 bis 20 Mol Ethylenoxid als nichtionischen Emulgator oder Gemischen davon durchführt.

Die Emulsionspolymerisation wird in wäßriger Lösung in an sich bekannten Vorrichtungen bevorzugt durchgeführt, indem ein Teil des Wassers, der Monomeren, der Emulgatoren und des Initiators vorgelegt werden, die Vorlage aufgeheizt wird und sodann eine Präemulsion aus restlichen Bestandteilen nach Beginn der Polymerisation langsam bei Polymerisationstemperatur zugespeist wird.

Gegenstand der Erfindung ist schließlich die Verwendung der auf diese Weise hergestellten Copolymerisatdispersionen als Bindemittel zur Herstellung von wärmehärtbaren Überzugsmitteln.

Um die gewünschten Eigenschaften ohne Verwendung größerer Mengen Filmbildehilfsmittel einzustellen, muß die Glasübergangstemperatur Tg der aus der Monomerenkombination a) bis f) hergestellten Dispersion einen Wert von unter 60 °C aufweisen, so daß die Mindestfilmbildetemperatur in einem Bereich zwischen 0 und 50 °C liegt.

Um eine ausreichende Reaktivität bei der durch Wärme herstellbaren Selbstvernetzung zu erreichen, enthält das Copolymerisat 16 bis 30, vorzugsweise 18 bis 22 Gew.% Monomere c) und d), bezogen auf die Gesamtsumme der Monomeren a) bis f) gleich 100.

Der Einbau von ungesättigten Carbonsäuren e) in das Copolymerisat erhöht die Stabilität der Dispersion bei der Herstellung, Lagerung und Anwendung. Insbesondere bei der Herstellung von hochglänzenden Lacken treten bei der Pigmentierung sehr hohe Scherkräfte auf, die bei herkömmlichen Dispersionen zur

3

Koagulation führen können. Aus diesem Grund enthält das Copolymerisat 0,5 bis 5, vorzugsweise 1 bis 3 Gew.%, bezogen auf die Summe a) bis f) gleich 100, einer alpha,beta-ungesättigten Monocarbonsäure mit vorzugsweise 4 oder 5 Kohlenstoffatomen und/oder einer ungesättigten Dicarbonsäure mit vorzugsweise 4 oder 5 Kohlenstoffatomen oder einer Mischung solcher Monomerer. Geeignete Säuren sind Acrylsäure, Methacrylsäure, Crotonsäure, Maleinsäure, Fumarsäure und Itaconsäure. Bevorzugt werden Acrylsäure und/oder Methacrylsäure.

Außerdem enthält das Copolymerisat noch 0 bis 4 Gew.%, bezogen auf die Summe a) bis f) gleich 100, eines alpha, beta- ungesättigten Monocarbonsäureamides und/oder eines ungesättigten Dicarbonsäureamides oder eines Gemisches solcher Monomerer. Diese Monomere sollen zur Stabilisierung bei der Herstellung und Verarbeitung beitragen. Außerdem dient ihr Gehalt zur Einstellung der gewünschten Teilchengröße. Bevorzugt werden 0,5 bis 1,5 Gew.%, bezogen auf die Summe a) bis f) gleich 100.

Die Auswahl und Menge der Monomeren ist nach den Anforderungen, die an den eingebrannten, selbstvernetzenden Überzug hinsichtlich Härte, Wasser-, Wetter-, Lösemittel- und Chemikalienbeständigkeit gestellt werden,zu treffen.

Die erfindungsgemäße Copolymerisatdispersion besitzt einen Feststoffgehalt von 30 bis 60 Gew.%, vorzugsweise 40 bis 50 Gew.%. Sie enthält neben dem Copolymerisat außerdem einen oder mehrere anionische Emulgatoren und/oder einen oder mehrere nichtanionische Emulgatoren.

Beispiele für verwendbare anionische Emulgatoren sind Alkalisalze von Schwefel- oder Phosphorsäureteilestern von Alkoholen, oxethylierten Alkylphenolen oder Alkoholen, sowie Alkyl- oder Arylsulfonate. Außerdem sind Salze von Sulfobernsteinsäureestern und -halbestern sowie N-substituierten Sulfobernsteinsäureamiden geeignet. Vorzugsweise werden Sulfobernsteinsäurehalbester, Alkanolsulfate und oxethylierte Alkylphenolsulfate in einer Menge von 0,1 bis 5 Gew.%, bezogen auf Monomere a) bis f) gleich 100, eingesetzt.

Zur Erhöhung der Stabilität der erfindungsgemäßen Dispersionen werden zusätzlich ein oder mehrere nichtanionische Emulgatoren vom Typ eines oxethylierten Alkylphenols oder Fettalkohols, z.B. Nonylphenol, mit 4 bis 50 Mol und insbesondere 3 bis 20 Mol Ethylenoxid, in einer Menge von 0,1 bis 5, vorzugsweise 0,5 bis 2 Gew.%, bezogen auf die Monomeren a) bis f) gleich 100, eingesetzt.

Als Katalysatoren bzw. Initiatoren eignen sich die üblichen Ammonium-, Natrium und Kaliumsalze der Peroxodischwefelsäure und der Peroxodiphosphorsäure. Es können auch organische Peroxide z.B. Dibenzolperoxid oder tert-Butylhydroperoxid eingesetzt werden. Als Aktivatoren können Reduktionsmittel, insbesondere Natriumdisulfit, Hydrazin, Hydroxylamin eingesetzt werden. Als Beschleuniger der Polymerisationsreaktion können ferner Salze von Übergangsmetallen wie z.B. von Cobalt, Eisen oder Vanadin eingesetzt werden.

Das erfindungsgemäße Polymerisationsverfahren wird als Emulsionspolymerisation in einem wäßrigen Medium in bekannten Apparaten, wie einem Rührkessel mit Heiz- und Kühlvorrichtung, durchgeführt. Dabei sind die Monomeren in einem wäßrigen Medium emulgiert. Die Zugabe der Monomeren kann so erfolgen, daß eine Lösung aus dem gesamten Wasser, dem Emulgator und einem Teil des Initiators vorgelegt wird und das Monomerengemisch und der Rest des Initiators bei Polymerisationstemperatur langsam zugegeben wird. Weiterhin ist es möglich, einen Teil des Wassers, der Emulgatoren und des Initiators vorzulegen, aus den Monomeren, dem restlichen Wasser, den restlichen Emulgatoren und dem restlichen Initiator eine Voremulsion herzustellen und diese bei Polymerisationstemperatur langsam einzuspeisen. Ferner besteht die Möglchkeit, einen Teil des Wassers, der Monomeren, der Emulgatoren und des Initiators vorzulegen und aus den restlichen Bestandteilen eine Präemulsion herzustellen. Bei diesem vorzugsweisen Verfahren wird die Vorlage aufgeheizt und nach Beginn der Polymerisation die Präemulsion langsam bei Polymerisationstemperatur im Verlaufe von 1 bis 4 Stunden zugespeist. Bei diesem vorzugsweisen Verfahren befinden sich 15 bis 50 Gew.% des gesamten Wassers bezogen auf die Ansatzmenge, 10 bis 70 Gew.% der gesamten Katalysatormenge und 3 bis 20 Gew.% der Monomeren sowie 10 bis 60 Gew.% der eingesetzten Emulgatoren in der Vorlage.

Die Polymerisationstemperatur liegt in einem Bereich von 50 bis 100°C, vorzugsweise 80 bis 95°C. Nach beendeter Zugabe des Monomerengemisches bzw., der Voremulsion wird der Ansatz noch 0,5 bis 3 Stunden bei 50 bis 100°C, vorzugsweise bei 80 bis 95°C, zur Restmonomerenverminderung gerührt.

Die durch das erfindungsgemäße Verfahren erhaltenen Copolymerisate haben Glasübergangstemperaturen im Bereich von 0 bis <60°C, vorzugsweise zwischen +10 und +40°C. Das erfindungsgemäße Verfahren führt zu Copolymerisaten, die eine mittlere Teilchengröße zwischen 30 und 400 nm, bevorzugt zwischen 90 und 180 nm, aufweisen.

Die erfindungsgemäße Copolymerisat-Dispersion kann zu Klarlacken oder zu pigmentierten Lacken formuliert werden. In pigmentierten Systemen geht man so vor, daß ein Teil oder die gesamte benötigte Dispersionsmenge mit Pigmenten und/oder Füllstoffen sowie den üblichen Lackhilfsmitteln und gegebenenfalls Neutralisationsmitteln zu einer Pigmentpaste angerieben wird. Im bevorzugten Fall wird nur ein Teil der Dispersion vorgelegt und die restliche Dispersionsmenge nach dem Anreiben der Pigmentpaste zugesetzt.

Die Überzugsmittel auf Basis der erfindungsgemäßen Copolymerisat-Dispersion können auf eine Vielzahl von Untergründen aufgebracht werden, die jedoch die Einbrenntemperatur unbeschadet überstehen müssen. Geeignete Untergründe sind Metalle, wie Eisen, Stahl, Zink, Aluminium, Kupfer, Bronze oder Messing. Andere geeignete Untergründe sind verschiedene Kunststoffe, wie Polyvinylchlorid, Polymethylmethacrylat, Polyurethane, Polycarbonate, Polyolefine, Polystyrol und andere Mischpolymerisate. Außerdem sind Hölzer ebenfalls als Untergrund geeignet. Die pigmentierten oder nicht pigmentierten Dispersionslacke können unter Verwendung von Spritzpistolen, durch Streichen, Rakeln, Walzen oder Tauchen auf die Untergründe aufgebracht werden. Dann wird der überzogene Gegenstand bei Raumtemperatur oder geringfügig oberhalb Raumtemperatur abgelüftet und teilweise oder vollständig getrocknet. Anschließend wird der Lackfilm durch "Einbrennen" bei einer Temperatur von 60 bis 200° C durchgehärtet. Die erfindungsgemäßen Überzüge werden über einen Zeitraum von 5 bis 45 Minuten eingebrannt. Die Trokkenfilmschichtdicken liegen zwischen 20 und 300 µ, vorzugsweise zwischen 30 und 100 µ.

Die eingebrannten pigmentierten oder nicht pigmentierten Lackfilme der auf Basis der erfindungsgemäßen Copolymerisatdispersion hergestellten Überzugsmittel weisen einen hervor ragenden Verlauf aus. Die oft zu beobachtenden Oberflächenstörungen, beispielsweise Kraterbildung, Orangenschaleneffekt, Schrumpf- und Spannungsrisse sowie Stippen- und Porenbildung, sind nicht vorhanden. Außerdem zeigen diese Lackfilme gute Deckkraft, Glätte (Slipeffekt), Elastizität, Glanz, Haftung, Wetterbeständigkeit und Vergilbungsresistenz.

Die folgenden Beispiele dienen zur näheren Erläuterung der Erfindung. Prozentangaben und Verhältnisangaben beziehen sich jeweils auf das Gewicht.

Die Polymerisationsversuche wurden in einer üblichen Polymerisationsanlage mit Reaktoren, Rührern, Leitungen und Vorratsbehältern aus Glas durchgeführt.

Beispiel 1

Es handelt sich um ein Verfahren mit zwei Präemulsionen, einer Startlösung, die im Reaktionsgefäß, sowie eine Präemulsion, die in einem Vorratsgefäß hergestellt wurde.

Zusammensetzung:

Startlösung (im Reaktor):

231,0 g demineralisiertes Wasser
40,5 g Dinatrium-laurylether-sulfosuccinat
32,6 g Nonylphenol mit 10 Ethylenoxid
23,1 g Acrylamid (30%ig in Wasser)
9,8 g Methacrylsäure
47,4 g Ammoniumperoxodisulfat (5%ig in Wasser)
86,7 g Methylmethacrylat
67,4 g n-Butylacrylat
19,3 g 2-Hydroxiethylmethacrylat
19,3 g N-Isobutoximethylacrylamid

Präemulsion (im Vorratsgefäß):

481,3 g demineralisiertes Wasser
57,8 g Dinatrium-laurylether-sulfosuccinat
32,4 g Nonylphenol mit 30 Ethylenoxid
6,4 g Acrylamid (30%ig in Wasser)
10,8 g Methacrylsäure

5

70,3 g Ammoniumperoxodisulfat (5%ig in Wasser)

342,7 g Methylmethacrylat

267,6 g n-Butylacrylat

77,0 g 2-Hydroxyethylmethacrylat

77,o g N-Isobutoxymethylacrylamid

Durchführung:

Die Startlösung wurde unter Rühren aufgeheizt. Sobald der Reaktorinhalt 80° C erreicht hatte, wurde mit der gleichmäßigen Einspeisung der Präemulsion aus dem Vorratsgefäß begonnen. Sie dauerte zwei Stunden. Nach Anspringen der Reaktion wurden sehr schnell 95° C erreicht. Nach einem Temperaturmaximum fiel die Temperatur des Inhaltes schnell ab. Deshalb wurde durch zusätzliches Heizen der Reaktorinhalt während der Reaktion auf 85° C gehalten. Nach beendeter Einspeisung der Präemulsion aus dem Vorratsgefäß wurde bei 85° C eine einstündige Nachreaktion unter Rühren zum Abbau von Restmonomeren durchgeführt. Danach wurde die Polymerdispersion unter Rühren auf Raumtemperatur abgekühlt. Nach Siebung über ein 63 μ-Sieb wurde eine 50 % Feststoff enthaltende Dispersion mit einem pH-Wert von 4,1 und einer Viskosität von 150 mPas erhalten. Die Teilchengröße dieser Dispersion betrug 125 nm.

Beispiel 2

Es handelt sich um ein Verfahren mit zwei Präemulsionen, von denen eine, die Startlösung, im Reaktor, und die andere in einem Vorratsgefäß mit Rührer hergestellt wurde.

Zusammensetzung:

Startlösung (im Reaktor):

200,0 g demineralisiertes Wasser

10,5 g Natriumlaurylsulfat (30%ig in Wasser)

12,7 g Nonylphenol mit 10 Ethylenoxid (24%ig)

18,0 g Acrylamid (30%ig in Wasser)

7,7 g Methacrylsäure

36,9 g Ammoniumperoxidsulfat (5%ig in Wasser)

23,8 g Methylmethacrylat

35,7 g n-Butylacrylat

Präemulsion (im Vorratsgefäß):

400,0 g demineralisiertes Wasser

5,0 g Natriumlaurylsulfat (30%ig in Wasser)

12,6 g Nonylphenol mit 30 Ethylenoxid (25%ig)

5,0 g Acrylamid (30%ig in Wasser)

8,4 g Methacrylsäure

54,8 g Ammoniumperoxodisulfat (5%ig in Wasser)

214,3 g Methylmethacrylat

321,6 g n-Butylacrylat

75,0 g 2-Hydroxyethylmethacrylat

75,o g N-Isobutoxymethylacrylamid

Durchführung:

Die Reaktorfüllung wurde unter Rühren aufgeheizt. Bei etwa 78° C sprang die Reaktion an. Dann wurde mit der 90 Minuten dauernden gleichmäßigen Einspeisung der Präemulsion aus dem Vorratsgefäß begonnen. Die Reaktionstemperatur stieg auf 82° C und wurde während der Einspeisung beibehalten. Nach beendeter Präemulsionseinspeisung wurde eine 90minütige Nachreaktion bei 82° C zur Restmonomerenreduzierung durchgeführt. Dann wurde abgekühlt und die Dispersion bei 35° C über ein 63 μ Sieb filtriert. Die Dispersion enthielt 48 % Feststoff, wies einen pH-Wert von 2,3 und eine Teilchengröße von 140 nm auf. Die Viskosität betrug 170 mPas.

Beispiel 3

Es handelt sich um ein Verfahren mit zwei Präemulsionen, von denen eine, die Startlösung, im Reaktor und die andere in einem Vorratsgefäß mit Rührer hergestellt wird.

Zusammensetzung:

Startlösung (im Reaktor):

280,0 g demineralisiertes Wasser
11,1 g Natriumlaurylsulfat (30%ig in Wasser)
13,4 g Nonylphenol mit 10 Ethylenoxid (24%ig)
18,9 g Acrylamid (30%ig in Wasser)
8,1 g Methacrylsäure
38,8 g Ammoniumperoxodisulfat (5%ig in Wasser)
25,1 g Styrol
37,6 g n-Butylacrylat

Präemulsion (im Vorratsgefäß):

575,0 g demineralisiertes Wasser
15,8 g Natriumlaurylsulfat (30%ig in Wasser)
13,3 g Nonylphenol mit 30 Ethylenoxid (25%ig)
5,3 g Acrylamid (30%ig in Wasser)
8,9 g Methacrylsäure
57,6 g Ammoniumperoxodisulfat (5%ig in Wasser)
225,8 g Styrol
329,3 g n-Butylacrylat
79,1 g 2-Hydroxyethylmethacrylat
79,1 g N-Isobutoxymethylacrylamid

Durchführung:

Die Reaktorfüllung wurde unter Rühren aufgeheizt. Bei ca. 75° C springt die Reaktion an. Dann wurde mit der 90 Minuten dauernden gleichmäßigen Einspeisung der Präemulsion aus dem Vorratsgefäß begonnen. Die Reaktionstemperatur stieg auf 85° C und wurde während der Einspeisung beibehalten. Nach beendeter Präemulsionseinspeisung wurde eine 45-minüti ge Nachreaktion bei 85° C zur Restmonomerenreduzierung durchgeführt. Dann wird abgekühlt und die Dispersion bei 35° C über ein 63-μ Sieb filtriert. Die Dispersion enthält 43,5 % Feststoff, weist einen pH-Wert von 2,7 und eine Teilchengröße von 119 nm auf. Die Viskosität beträgt 600 mPas.

Beispiel 4

Es handelt sich um ein Verfahren mit zwei Präemulsionen, von denen eine, die Startlösung, im Reaktor und die andere in einem Vorratsgefäß mit Rührer hergestellt wird.

Zusammensetzung:

Startlösung (im Reaktor):

329,0 g demineralisiertes Wasser
11,1 g Natriumlaurylsulfat (30%ig in Wasser)
13,4 g Nonylphenol mit 10 Ethylenoxid (24%ig)
19,0 g Acrylamid (30%ig in Wasser)
4,1 g Methacrylsäure
38,8 g Natriumperoxodisulfat (5%ig in Wasser)
33,4 g Vinylacetat
16,7 g VeoVa * 10 ®
16,7 g n-Butylacrylat

Präemulsion (im Vorratsgefäß):

658,0 g demineralisiertes Wasser
15,8 g Natriumlaurylsulfat (30%ig in Wasser)
13,3 g Nonylphenol mit 30 Ethylenoxid (25%ig)
5,3 g Acrylamid (30%ig in Wasser)
4,1 g Methacrylsäure
57,6 g Natriumperoxodisulfat (5%ig in Wasser)
279,9 g Vinylacetat
140,0 g VeoVa * 10 ®
140,0 g n-Butylacrylat
79,0 g 2-Hydroxyethylmethacrylat
79,0 g N-Isobutoxymethacrylamid.

Durchführung:

Die Reaktorfüllung wurde unter Rühren aufgeheizt. Bei etwa 72°C sprang die Reaktion an. Sobald 80°C erreicht waren, wurde mit der 90 Minuten dauernden gleichmäßigen Einspeisung der Präemulsion aus dem Vorratsgefäß begonnen. Die Reaktionstemperatur stieg auf 82°C an und wurde während der Einspeisung beibehalten. Nach beendeter Präemulsionseinspeisung wurde eine 90-minütige Nachreaktion bei 85°C zur Restmonomerenreduzierung durchgeführt. Dann wurde abgekühlt und die Dispersion bei 35°C über ein 63-µ Sieb filtriert. Die Dispersion enthielt 40,0 % Feststoff, wies einen pH-Wert von 2,6 und eine Teilchengröße von 320 nm auf. Die Viskosität betrug 31 mPas.

Beispiel 5 (Vergleich)

Es handelt sich um ein Verfahren mit zwei Präemulsionen, von denen eine, die Startlösung, im Reaktor und die andere in einem Vorratsgefäß mit Rührer hergestellt wurde.

*VeoVa = Versaticsäurevinylester mit etwa 10 Kohlenstoffatomen

Zusammensetzung:

Startlösung (im Reaktor):

236,0 g demineralisiertes Wasser
12,3 g Natriumlaurylsulfat (30%ig in Wasser)
14,9 g Nonylphenol mit 10 Ethylenoxid (24%ig)
21,1 g Acrylamid (30%ig in Wasser)
9,0 g Methacrylsäure
43,4 g Ammoniumperoxodisulfat (5%ig in Wasser)
32,2 g Methylmethacrylat
39,3 g n-Butylacrylat

Präemulsion (im Vorratsgefäß):

472,2 g demineralisiertes Wasser
17,6 g Natriumlaurylsulfat (30%ig in Wasser)
14,8 g Nonylphenol mit 30 Ethylenoxid (25%ig)
6,0 g Acrylamid (30%ig in Wasser)
9,0 g Methacrylsäure
64,5 g Ammoniumperoxodisulfat (5%ig in Wasser)
322,0 g Methylmethacrylat
393,5 g n-Butylacrylat
90,4 g N-Isobutoxymethylacrylamid

Durchführung:

Die Reaktorfüllung wurde unter Rühren aufgeheizt. Bei etwa 78° C sprang die Reaktion an. Dann wurde mit der 90 Minuten dauernden gleichmäßigen Einspeisung der Präemulsion aus em Vorratsgefäß begonnen. Die Reaktionstemperatur stieg auf 85° C und wurde während der Einspeisung beibehalten. Nach beendeter Präemulsionseinspeisung wurde eine 60-minütige Nachreaktion bei 85° C zur Restmonomerenreduzierung durchgeführt. Dann wurde abgekühlt und die Dispersion bei 35° C über ein 63-μ Sieb filtriert. Die Dispersion enthielt 50 % Feststoff, wies einen pH-Wert von 2,1 und eine Teilchengröße von 135 nm auf. Die Viskosität betrug 228 mPas.

Beispiel 6 (Vergleich)

Es handelt sich um ein Verfahren mit zwei Präemulsionen, von denen eine, die Startlösung, im Reaktor und die andere in einem Vorratsgefäß mit Rührer hergestellt wurde.

Zusammensetzung:

Startlösung (im Reaktor):

208,0 g demineralisiertes Wasser
10,9 g Natriumlaurylsulfat (30%ig in Wasser)
13,3 g Nonylphenol mit 10 Ethylenoxid (24%ig)
18,7 g Acrylamid (30%ig in Wasser)

9

8,0 g Methacrylsäure

38.4 g Ammoniumperoxodisulfat (5%ig in Wasser)

30.2 g Methylmethacrylat

26,6 g n-Butylacrylat

Präemulsion (im Vorratsgefäß):

569,0 g demineralisiertes Wasser

15,5 g Natriumlaurylsulfat (30%ig in Wasser)

13,1 g Nonylphenol mit 30 Ethylenoxid (25%ig)

5,3 g Acrylamid (30%ig in Wasser)

8,0 g Methacrylsäure

57,6 g Ammoniumperoxodisulfat (5%ig in Wasser)

436,0 g Methylmethacrylat

284,0 g n-Butylacrylat

Durchführung:

Die Reaktorfüllung wurde unter Rühren aufgeheizt. Bei etwa 78 °C sprang die Reaktion an. Dann wurde mit der 90 Minuten dauernden gleichmäßigen Einspeisung der Präemulsion aus dem Vorratsgefäß begonnen. Die Reaktionstemperatur stieg auf 85 °C und wurde wahrend der Einspeisung beibehalten. Nach beendeter Präemulsionseinspeisung wurde eine 90-minütige Nachreaktion bei 85 °C zur Restmonomerenreduzierungdurchgeführt. Dann wurde abgekühlt und die Dispersion bei 35 °C über ein 63-μ Sieb filtriert. Die Dispersion enthielt 46 % Feststoff, wies einen pH-Wert von 1,8 und eine Teilchengröße von 140 nm auf. Die Viskosität betrug 60 mPas.

Beispiele 1 und 2 zeigen gegenüber Vergleichsbeispiel 5, das nur N-Isobutoxymethylacrylamid enthält, eine erheblich höhere Isobutanolabspaltung als Beweis der Vernetzung. Vergleichsbeispiel 6 enthält keinen Vernetzer.

Die thermische Vernetzbarkeit der erfindungsgemäßen Dispersionen wurde

1. gravimetrisch,

2. gaschromatographisch und

3. anwendungstechnisch durch Messung der Pendelhärten untersucht.

Die gravimetrische Methode besteht darin, daß auf gewogene Glasplatten Naßfilme der Dispersionen mit einer Naßfilmdicke von 300 μ aufgezogen und bei 25 °C 24 Stunden getrocknet wurden. Dann wird die Masse des Trockenfilms durch Wägung bestimmt. Anschließend werden die Trockenfilme bis zur Gewichtskonstanz bei 150 °C (etwa 2 Stunden) eingebrannt . Dann wird die Masse der Trockenfilme nochmals durch Wägung bestimmt. Der weitere Gewichtsverlust der Filme durch Einbrennen wird auf den Verlust von Isobutanol durch Vernetzung zurückgeführt.

Die gaschromatographische Methode besteht darin, daß zur Dispersion etwa 1 % o-Xylol zugewogen wird und ein Teil dieser Mischung nach Homogenisierung in den Verdampferraum eines Gaschromatographen eingespritzt wird. Mit üblicher gaschromatographischer Methode wird nun die freigesetzte Isobutanolmenge bestimmt. Diese Methode wird bei Verdampferraumtemperaturen von 100 und 175 °C durchgeführt.

| Dispersion | Isobutanolabgabe (Gew.%) | | |
|---|---|---|---|
| | gravimetrisch | gaschromatographisch | theoretisch |
| Beispiel 1 | 2,6 | 1,4 | 1,92 |
| Beispiel 2 | 2,8 | 2,5 | 1,92 |
| Beispiel 5 (Vergleich) | 1,1 | 0,9 | 1,92 |
| Beispiel 6 (Vergleich) | 0,8 | 0,0 | 0,00 |

Bei der anwendungstechnischen Methode ist in der Veränderung der Härte der Filme in Abhängigkeit

10

von der Einbrenntemperatur ein Maß für die Vernetzung gegeben. Die Härte wird mit einem Pendelhärtemeßgerät nach König bestimmt. Die Messung basiert auf dem Schwingungsdämpfungsprinzip des Prüfpendels und wird wie folgt durchgeführt. Die zu prüfende Dispersion wird in 150 μ Naßfilmdicke auf eine 3 mm starke Glaplatte aufgezogen. Dann wird abgelüftet und bei verschiedenen Temperaturen 30 Minuten eingebrannt. Eine Stunde nach Abkühlung auf Raumtemperatur wird die Pendelhärte in Sekunden bestimmt. Je größer die Härte eines Films ist, um so höher ist die Sekundenzahl.

| Dispersion | Pendelhärte in Sekunden nach 30 Minuten Einbrennen bei | | | | |
|---|---|---|---|---|---|
| | 50° C | 100° C | 120° C | 140° C | 160° C |
| Beispiel 1 | 105 | 120 | 137 | 153 | 167 |
| Beispiel 2 | 83 | 93 | 110 | 122 | 130 |
| Beispiel 3 | 74 | 83 | 97 | 115 | 130 |
| Beispiel 4 | 35 | 43 | 57 | 76 | 74 |
| Beispiel 5 (Vergleich) | 41 | 32 | 43 | 52 | 55 |
| Beispiel 6 (Vergleich) | 95 | 92 | 95 | 100 | 97 |

Die Dispersionen der Beispiele 1 bis 4 zeigen beim Einbrennen eine Erhöhung der Pendelhärte um 50 bis 110 %. Die Dispersion des Beispiels 5, das nur N-Isobutoxymethylacrylamed enthält, zeigt beim Einbrennen nur eine Pendelhärteerhöhung um 35 %. Die Dispersion des Beispiels 6, das kein Vernetzermonomer enthält, zeigt keine Erhöhung der Pendelhärte.

Beispiel 7 (Anwendung)

Herstellung einer Weißlackfarbe auf Basis der Copolymerdispersion des Beispiels 1.
Die Anreibung des Lackes erfolgte mit einem Dissolver. In einen Ansetzbehälter wurden in der gegebenen Reihenfolge in 25 Minuten eingetragen:
333,0 g Dispersion des Beispiels 1
3,5 g Ammoniak (25%ig)
2,o g Ammoniumpolyacrylat (25%ig)
1,o g Entschäumer
210,0 g Titandioxid (Rutiltyp)
Nach 10minütigem Dispergieren mit Dissolver Zugabe von
400,0 g Dispersion Beispiel 1
4,5 g Ammoniak (25%ig)
1,0 g Entschäumer
15,0 g Propandiol-1,2
10,0 g Butylglykol
und weiteres Dispergieren für 15 Minuten.
Anschließend wurde der Ansatz mit Wasser auf eine Auslaufzeit (nach DIN 53 211) von 20 Sekunden eingestellt. Der fertige Lack wurde mit einem 80-μ Spiralrakel auf verschiedene Untergründe aufgebracht und 4 Minuten bei 150°C einge brannt. Die Erichsen-Tiefung (nach DIN 53 156) ergab bei Stahlblechen einen Wert von 9,8 mm. Die Pendelhärte des Lackes (nach DIN 53 157) betrug 134 Sekunden, der Glanz (nach DIN 67 530) 89 %.
Der Lösemittelbeständigkeitstest wurde wie folgt durchgeführt. Ein mit Methylethylketon bzw. 50%igem Ethanol getränkter Wattebausch wurde mit leichtem gleichmäßigen Andruck so lange über den gleichen Bereich der Beschichtung hin- und hergerieben, bis der Untergrund durchscheint. Die Beständigkeit der Beschichtung gegen Lösemittel wurde in Doppelhüben angegeben.
Im Beispiel 7 wurden gegen Methylethylketon 230 und gegen 50%igen Ethanol mehr als 300 Doppelhübe erreicht.

11

Beispiel 8 (Anwendung)

Im Beispiel 8 wurde wie im Beispiel 7 verfahren, jedoch wurde die Dispersion des Beispiels 2 an Stelle der Dispersion des Beispiels 1 verwendet.

Folgende Abprüfergebnisse wurden erhalten: Erichsen-Tiefung (DIN 53 156)    :9,9 mm
Pendelhärte (DIN 53 157)    :118 s
Glanz (DIN 67 530)    :93 %
Lösemittelbeständigkeit
gegen Methylethylketon    : 300 Doppelhübe
gegen 50%igen Ethanol    : 300 Doppelhübe
Gitterschnitt (DIN 53 151)
auf unbehandeltem Aluminium    : 0
auf unbehandeltem Stahlblech    : 0
auf verzinktem Stahlblech    : 0
auf senzimiertem Eisenblech    : 0

Beispiel 9 (Anwendung, Vergleich)

Im Beispiel 9 wurde wie im Beispiel 7 verfahren, jedoch wurde die Dispersion des Beispiels 5 (Vergleich) an Stelle der Dispersion des Beispiels 1 verwendet.

Folgende Abprüfergebnisse wurden erhalten: Erichsen-Tiefung (DIN 53 156)    : 9,4 mm
Pendelhärte (DIN 53 157)    : 60 s
Glanz (DIN 67 530)    : 88 %
Lösemittelbeständigkeit
gegen Methylethylketon    : 13 Doppelhübe
gegen 50%igen Ethanol    : 40 Doppelhübe
Gitterschnitt (DIN 53 151)
auf unbehandeltem Aluminium    : 1
auf unbehandeltem Stahlblech    : 0
auf verzinktem Stahlblech    : 0
auf senzimiertem Eisenblech    : 2

Beispiel 10 (Anwendung, Vergleich)

Im Beispiel 10 wurde wie im Beispiel 7 verfahren, jedoch wurde die Dispersion des Beispiels 6 (Vergleich) an Stelle der Dispersion des Beispiels 1 verwendet.

Folgende Abprüfergebnisse wurden erhalten: Erichsen-Tiefung (DIN 53 156    : 8,8 mm
Pendelhärte (DIN 53 157)    : 143 s
Glanz (DIN 67 530)    : 74 %
Lösemittelbeständigkeit
gegen Methylethylketon    : 9 Doppelhübe
gegen 50%igen Ethanol    : 25 Doppehübe
Gitterschnitt (DIN 53 151)
auf unbehandeltem Aluminium    : 1
auf unbehandeltem Stahlblech    : 2
auf verzinktem Stahlblech    : 0
auf senzimiertem Eisenblech    : 2

Es wird die hohe Lösemittelbeständigkeit (ausgedrückt in Doppelhüben) gegen 50 % Alkohol und gegen Methylethylketon gezeigt. Außerdem ist der Vorteil höherer mechanischer Belastbarkeit durch Vernetzung, ausgedrückt in Erichsen-Tiefung deutlich erkennbar. Weiterhin zeigen die erfindungsgemäßen Dispersionen einen höheren Glanz als die Vergleichsbeispiele.

Ansprüche

1. Wäßrige Kunststoffdispersion auf Basis eines Copolymerisats aus Acryl- und/oder Vinylmonomeren, sowie Emulgatoren,

**gekennzeichnet durch** die folgende Zusammensetzung, bezogen auf Polymerfestsubstanz,

(a) 20 bis 60 Gew.% eines Vinylbenzols, das mit $C_1$ bis $C_4$-Alkylgruppen im Kern oder in der Vinylgruppe substituiert sein kann, und/oder
von tert-Butylacrylat oder eines Methacrylats mit einer $C_1$ bis $C_5$-Monoalkoholkomponente und/oder eines Vinylesters mit einer $C_1$ bis $C_{11}$-Monocarbonsäurekomponente
oder eines Gemisches solcher Monomeren, jeweils mit einer Homopolymerisatglastemperatur Tg der einzelnen Monomeren über 35° C,

(b) 25 bis 55 Gew.% eines Acrylats mit einer $C_1$ bis $C_8$-Monoalkoholkomponente und/oder eines Methacrylats mit einer $C_5$ bis $C_{10}$-Monoalkoholkomponente und/oder eines Vinylesters mit einer $C_1$ bis $C_{11}$-Monocarbonsäurekomponente
oder eines Gemisches solcher Monomeren jeweils mit einer Homopolymerisatglastemperatur Tg der einzelnen Monomeren unter 35° C,

(c) 8 bis 15 Gew.% eines (Meth)acrylat-Monomeren mit einer $C_2$ bis $C_8$-Alkanpolyolkomponente,

(d) 8 bis 15 Gew.% eines veretherten N-Alkylol(meth)acrylamides der allgemeinen Formel
$CH_2 = C(R_1)-C(O)-NH-(A)-O-R_2$ ,
worin $R_1$ Wasserstoff oder Methyl,
A $C_1$ bis $C_4$ n- oder iso-Alkylen und
$R_2$ $C_1$ bis $C_4$-Alkyl bedeuten,

(e) 0,5 bis 5 Gew.% einer alpha, beta-ungesättigten Monocarbonsäure mit 3 bis 5 Kohlenstoffatomen und/oder einer alpha, beta-ungesättigten Dicarbonsäure mit 3 bis 5 Kohlenstoffatomen und

(f) 0 bis 4 Gew.% eines Amides einer alpha, beta-ungesättigten Monocarbonsäure mit 3 bis 5 Kohlenstoffatomen und/oder einer alpha, beta-ungesättigten Dicarbonsäure mit 4 bis 5 Kohlenstoffatomen.

2. Wäßrige Kunststoffdispersion nach Anspruch 1, **gekennzeichnet durch** die folgende Zusammensetzung:

(a) Styrol, α-Methylstyrol, Vinyltoluol und/oder tert-Butylacrylat, tert-Butylmethacrylat, Ethylmethacrylat, Methylmethacrylat, Isopropylmethacrylat und/oder
Vinylacetat, Vinylpivalat, Gemische α-tertiärverzweigter Carbonsäuren mit etwa 9 C-Atomen (Vinylversatat 9)
oder eines Gemisches solcher Monomeren jeweils mit einer Homopolymerisatglastemperatur Tg der einzelnen Monomeren über 35° C,

(b) Acrylsäureester mit einer $C_4$ bis $C_8$-Monoalkoholkomponente, Methacrylester mit einer $C_8$ bis $C_{10}$-Monoalkoholkomponente und insbesondere n-Butylacrylat, 2-Ethylhexylacrylat und n-Decylmethacrylat und/oder Vinylpropionat, Gemische α-tertiärverzweigter Carbonsäuren mit etwa 10 Kohlenstoffatomen (Vinylversatat 10)
oder eines Gemisches solcher Monomerer jeweils mit einer Homopolymerisatglastemperatur Tg der einzelnen Monomeren unter 35° C,

(c) Acrylsäure- und/oder Methacrylsäureester von Ethandiol, Propandiol, Butandiol, Hexandiol, Trimethylol propan oder Pentaerythrit,

(d) verethertes N-Alkylol(meth)acrylamid mit Methylen als Alkylengruppe und Methyl oder Isobutyl als Alkylgruppe, insbesondere N-Isobutoxymethyl(meth)acrylamid, N-Methoxymethyl(meth)acrylamid,

(e) Acrylsäure, Methacrylsäure, Crotonsäure und/oder Maleinsäure, Fumarsäure, Itaconsäure und

(f) Acrylamid, Methacrylamid und/oder Maleinsäuremono- und -diamid, Fumarsäuremono- und -diamid.

3. Wäßrige Kunststoffdispersion nach Anspruch 1 oder Anspruch 2, **gekennzeichnet durch** die folgende Zusammensetzung, bezogen auf Polymersubstanz,

30 bis 50 Gew.% der Komponente (a),
33 bis 50 Gew.% der Komponente (b),
9 bis 11 Gew.% der Komponente (c),
9 bis 11 Gew.% der Komonente (d),
1 bis 3 Gew.% der Komponente (e) und
0,5 bis 1,5 Gew.% der Komponente (f).

4. Verfahren zur Herstellung einer wäßrigen Kunststoffdispersion nach einem der Ansprüche 1 bis 3, **gekennzeichnet durch** radikalische Emulsionscopolymerisation des Monomerengemisches in Gegenwart eines radikalbildenden Katalysators und eines oder mehrerer Emulgatoren.

13

5. Verfahren nach Anspruch 4,

**dadurch gekennzeichnet,**

daß man die Emulsionspolymerisation in Gegenwart von 0,3 bis 1,5 Gew.% Katalysator und 0,1 bis 5 Gew.% Emulgator(en) durchführt.

6. Verfahren nach Anspruch 4 oder 5,

**dadurch gekennzeichnet,**

daß man die Emulsionspolymerisation in Gegenwart von Ammonium-, Natrium- oder Kaliumsalzen der Peroxodischwefelsäure oder der Peroxodiphosphorsäure oder Gemischen davon als Katalysator und in Gegenwart von Natrium-, Kalium- oder Ammoniumsalzen von Sulfobernsteinsäureestern und -halbestern. Alkanolsulfaten und oxethylierten Alkylphenolsulfaten als anionische Emulgatoren und/oder oxethyliertem Fettalkohol oder Fettalkoholethanolamid mit 3 bis 20 Mol Ethylenoxid als nichtionischen Emulgator oder Gemischen davon durchführt.

7. Verfahren nach einem der Ansprüche 4 bis 6,

**dadurch gekennzeichnet,**

daß die Emulsionspolymerisation in wäßrigem Medium in an sich bekannten Vorrichtungen dadurch durchgeführt wird, daß ein Teil des Wassers, der Monomeren, der Emulgatoren und des Katalysators vorgelegt werden, die Vorlage aufgeheizt wird und sodann eine Präemulsion aus den restlichen Bestandteilen nach Beginn der Polymerisation langsam bei Polymerisationstemperatur zugespeist wird.

8. Verwendung einer wäßrigen Kunststoffdispersion nach einem der Ansprüche 1 bis 3 als Bindemittel zur Herstellung von wärmehärtbaren Überzugsmitteln.